# EUROPÄISCHE PATENTSCHRIFT

(11) **EP 3 050 729 B1**
(45) Veröffentlichungstag und Bekanntmachung des Hinweises auf die Patenterteilung: **25.04.2018**
(21) Anmeldenummer: 15152926.0
(22) Anmeldetag: 28.01.2015
(51) Int. Cl.: B60J 7/10

(54) **Multifunktionshalterung**
Multifunction holder
Fixation multifonctions

(43) Veröffentlichungstag der Anmeldung: 03.08.2016
(73) Patentinhaber: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(56) Entgegenhaltungen:
- CH-A5- 691 981
- US-A1- 2010 270 825

## Beschreibung

### Technisches Gebiet

Die vorliegende Erfindung betrifft allgemein eine Multifunktionshalterung zur Befestigung an einem Aufbau oder einer Bordwand eines Nutzfahrzeugs. Bei einem Nutzfahrzeug kann es sich hier um einen motorgetriebenen Lastkraftwagen oder einen nicht angetriebenen Fahrzeuganhänger handeln. Eine derartige Multifunktionshalterung ist insbesondere dazu geeignet, verschiedene Zubehörteile wie Haken oder Schäkel eines Hebe- oder Spannzeuges, einen Spriegel, einen Planenhalter oder auch einen sogenannten Planenanschlag insbesondere im Bereich eines oberen Muldenrandes einer Mulde lösbar anbringen zu können. Ein Planenhalter dient hier zur Lagerung einer Plane in aufgerolltem Zustand, d.h., wenn die Plane nicht über den Laderaum gezogen ist. Ein Planenanschlag ist beispielsweise grundsätzlich dazu ausgebildet, eine Fixiermöglichkeit für eine über den Laderaum gezogene Plane zu schaffen.

Ferner betrifft die vorliegende Erfindung eine Mulde für ein Nutzfahrzeug oder einen Fahrzeuganhänger. Insbesondere sind derartige Mulden zur Aufnahme von beispielsweise Schüttgütern bestimmt und für die Verwendung auf Fahrzeuganhängern wie Kippsattelanhängern ausgebildet.

### Hintergrund

Im Bereich von Nutzfahrzeugen, die eine Mulde zum Aufnehmen von Schüttgütern aufweisen, ist es oftmals erforderlich, verschiedene Zubehörteile zu fixieren. Derartige Zubehörteile sind beispielsweise Planenhalter oder Planenanschläge, die am oberen Muldenrand lösbar anzubringen sind. Hierzu weisen die Zubehörteile insbesondere Stecklaschen auf, die in entsprechende Schlitze von festen Halterungen an der Mulde eingesteckt werden. Des Weiteren sind auch Spriegel und insbesondere Querspriegel lösbar im Bereich des oberen Muldenrandes zu montieren, um beispielsweise eine Plane oberhalb der Mulde bzw. dem Laderaum abstützen zu können. Des Weiteren ist es manchmal auch notwendig, die Mulde mittels Kranhaken hochzuheben. Schließlich tritt manchmal auch das Problem auf, dass die Mulde in Querrichtung am oberen Muldenrand durch Ketten oder Seile fixiert werden muss, damit bei größeren Belastungen die Mulde sich im oberen Bereich nicht aufweitet. Derartige Abspannungen müssen wiederum lösbar an der Mulde bzw. dem Muldenrand fixierbar sein.

Für all diese Zubehörteile hat man bisher separate Löcher oder einzelne Halterung an der Mulde vorgesehen. Diese bisherigen Lösungen sind jedoch in der Herstellung aufwendig und teuer und nur eingeschränkt verwendbar. Ferner ist die Bedienung aufgrund der unterschiedlichen Platzierungen für die einzelnen Zubehörteile nicht immer vorteilhaft.

Aus der CH 691 981 A5 ist ein Kastenprofil zum Haltern von Planken bekannt. Die Planken stützen sich auf von einer Rückwand des Kastenprofils herausragenden Steckzungen ab. Das Kastenprofil weist ferner auf einer Ober- und einer Unterseite jeweils eine Bohrung auf.

Das der vorliegenden Erfindung zugrundeliegende technische Problem besteht darin, eine kostengünstigere und in der Praxis flexiblere Halterung zu schaffen, die zumindest einen oder mehrere der vorgenannten Nachteile behebt.

### Zusammenfassung der Offenbarung

Dieses technische Problem wird durch eine Multifunktionshalterung gelöst, die dazu ausgebildet ist, an einem Rahmen, Aufbau oder einer Wand eines Nutzfahrzeugs beispielsweise angeschweißt zu werden. Insbesondere ist die Multifunktionshalterung gemäß der vorliegenden Erfindung dazu ausgebildet, an einer Innenwand einer Mulde eines Nutzfahrzeugs angeschweißt zu werden. Eine derartige Multifunktionshalterung umfasst ein Bodenelement, das ein Bodendurchgangsloch und an einer rückseitigen Stirnseite eine Bodenausnehmung bzw. eine Bodenausklinkung aufweist. Ein von dem Bodenelement beabstandetes und hierzu im Wesentlichen parallel verlaufendes Deckenelement ist mit einem Deckenelementdurchgangsloch ausgebildet und weist an einer rückseitigen Stirnseite eine rückseitige Deckenelementausnehmung bzw. Deckenelementausklinkung auf. Ein erstes Seitenelement und ein zweites Seitenelement, das von dem ersten Seitenwandelement beabstandet angeordnet ist, sind durch das Bodenelement und das Deckenelement starr verbunden. Bei dieser erfindungsgemäßen Multifunktionshalterung ist wenigstens das Deckenelementdurchgangsloch dazu ausgebildet, einen Spriegel bzw. ein Endstück hiervon aufzunehmen. Ferner ist wenigstens eines der Durchgangslöcher dazu ausgebildet, das Einhängen eines Eingriffsmittels wie z.B. ein Kranhaken, ein Spann- oder Zurrmittel oder ein Schäkel zu ermöglichen. Schließlich ist auch wenigstens eine der Ausnehmungen dazu ausgebildet, eine Stecköffnung für einen Planenhalter und/oder einen Planenanschlag zu begrenzen.

Der Erfindung liegt der Gedanke zugrunde, mittels eines einzigen Halterungselements Stecköffnungen und Einhaköffnungen für die genannten Zubehörteile im Nutzfahrzeugbau zu schaffen. Dazu dienen die Durchgangslöcher zum einen als Aufnahme für rohrförmige Endstücke eines Spriegels. Zum anderen können diese Löcher auch zum Einhängen eines Kranhakens oder Zurrmittels oder dergleichen verwendet werden. Zugleich ist es aber auch durch die Ausnehmungen möglich, auch bei eingestecktem Spriegel Einstecklaschen aufzunehmen, in dem die Ausnehmungen mit der Innenfläche der Mulde einen geschlossenen Schlitz begrenzen, wodurch eine Stecköffnung geschaffen ist. Darin können dann in einfacher Art und Weise, jedoch sehr sicher und stabil, Planenhalter oder Planenanschläge mit ihren Stecklaschen eingesteckt werden. In einer oder mehrerer der Öffnungen können dann die Spriegel gleichzeitig, auch wenn die Planenhalter oder Planenanschläge eingesteckt sind, in eines oder mehrere der Durchgangslöcher eingesteckt werden.

Bei einer vorteilhaften Ausführungsform einer erfindungsgemäßen Multifunktionshalterung ist zwischen dem Bodenelement und dem Deckenelement jeweils mit Abstand im Wesentlichen parallel zu diesen Elementen ein Zwischendeckenelement angeordnet. Darin sind ein Zwischendeckendurchgangsloch und an einer rückseitigen Zwischendeckenelementstirnseite eine rückseitige Zwischendeckenelementausnehmung bzw. Zwischendeckenelementausklinkung vorhanden. Damit sind bei dieser beispielhaften Multifunktionshalterung drei Befestigungsebenen geschaffen, die je nach Größe ihrer Durchgangslöcher und Ausnehmungen über ein, zwei oder drei Ebenen reichende Aufnahmen für das Zubehör oder mit den Durchgangsbohrungen über mehrere Ebenen stabile Halterungen für einzusteckende Rohre wie Spriegelendstücke oder dergleichen bilden.

Gleichzeitig ist auch die Höhe zwischen den verschiedenen Ebenen so ausgebildet, dass übliche Kranhaken und/oder Haken eines Zurrmittels in beispielsweise die obere Durchgangsbohrung, die mittlere Durchgangsbohrung oder auch die untere Durchgangsbohrung eingehakt werden können, ohne dass es zu ungewollten Verformungen der Multifunktionshalterung kommt. Ferner ist auch die mögliche Schweißnahtlänge vergrößert, die eine stabile Verschweißung an der Innenwand des Nutzfahrzeugsaufbaus, insbesondere einer Mulde eines Nutzfahrzeugs, ermöglicht. So ist es insbesondere möglich, die rückseitige Stirnseite, die mit der Innenwandfläche kontaktiert, der Form der Innenwand anzupassen, beispielsweise durch Vorsehen eines Absatzes.

Bei einer weiteren beispielhaften Ausführungsform einer erfindungsgemäßen Multifunktionshalterung ist zwischen dem Deckendurchgangsloch und der Deckenelementausnehmung ein Schlitz vorhanden. Alternativ oder gleichzeitig ist auch ein Schlitz in dem Zwischendeckenelement vorhanden, der das Zwischendeckenelementdurchgangsloch und die Zwischendeckenelementausnehmung miteinander verbindet. Außerdem kann zusätzlich oder auch nur in dem Bodenelementdurchgangsloch ein Schlitz vorhanden sein, der die Bodenelementausnehmung und das Bodenelementdurchgangsloch miteinander verbindet. Aufgrund der mehreren Schlitze wird beispielsweise die Herstellung durch Lasern erleichtert, gleichzeitig können aber auch noch andere Ausgestaltungen von Steckelementen eingeführt werden, die beispielsweise auch die durch diese Durchbrüche gebildeten Schlitze oder Öffnungen ausfüllen. Damit könnte die Halterung und die Fixierung verbessert werden.

Eine einfache und kostengünstige Herstellung einer erfindungsgemäßen Multifunktionshalterung sieht vor, dass das Bodenelement, das Deckenelement, das erste und das zweite Seitenwandelement einteilig aus einem Profilrohr herausgesägt oder geschnitten sind. Damit kann der Grundkörper der Multifunktionshalterung in einfacher Weise aus einem üblichen Profilrohr hergestellt werden.

Bei einer weiteren beispielhaften Ausführungsform ist das Zwischendeckenelement an den zwei Seitenwandelementen über Schlitze eingeschoben und dann an den zwei Seitenwandelementen angeschweißt. Damit ist eine kostengünstige Herstellung möglich.

Indem in einer beispielhaften Ausführungsform einer erfindungsgemäßen Multifunktionshalterung wenigstens die Durchgangslöcher in dem Deckenelement und dem benachbarten Element, also das Zwischendeckenelement oder das Bodenelement, sich in Längsachsenrichtung der Multifunktionshalterung zumindest teilweise überdecken, ist ein Einstecken über mehrere Ebenen eines Zubehörteils ermöglicht. Je mehr Ebenen in Eingriff sind, umso besser und stabiler ist die lösbare Fixierung des Zubehörteils in der Multifunktionshalterung.

Bei einer bevorzugten Ausgestaltung einer erfindungsgemäßen Multifunktionshalterung ist wenigstens das Deckendurchgangsloch und das Loch im benachbarten Element, das heißt, im Zwischendeckenelement oder im Bodenelement, im Wesentlichen kreisförmig ausgebildet, wodurch rohrförmige Spriegelhalter oder dergleichen einfach und sicher durch Einstecken fixiert werden können.

Die vorliegende Erfindung betrifft ferner eine Mulde zum Befestigen auf einem Nutzfahrzeug, insbesondere ein Lkw-Kipper oder ein Fahrzeuganhänger wie beispielsweise ein Kippsattelanhänger. Eine derartige Mulde gemäß der vorliegenden Erfindung weist eine rechte Muldeninnenwandfläche, eine linke Muldeninnenwandfläche und eine vordere Muldenstirnwandinnenfläche auf, die mit der rechten und linken Muldeninnenwand verbunden ist und zusammen mit diesen einen Laderaum begrenzt. Wenigstens eine Multifunktionshalterung gemäß der vorliegenden Erfindung ist an einer der Muldeninnenwandflächen oder der Muldenstirnwandinnenfläche angebracht, insbesondere angeschweißt. Das Deckenelement befindet sich im Bereich eines oberen Muldenrandes und die Ausnehmung begrenzen zusammen mit der Innenwandfläche der Mulde eine Stecköffnung, in die ein entsprechend geformtes Steckelement wie eine Planenhalterung oder ein Planenanschlag einsteckbar sind.

Zusammenfassend ist festzustellen, dass eine erfindungsgemäßes Multifunktionshalterung eine gegenüber dem bekannten Stand der Technik höhere Belastbarkeit aufweisen kann, wenn die Schweiß- und Kontaktflächen der Multifunktionshalterung an die Kontur einer Muldeninnenwand durch die an die Innenfläche der Mulde angepasste Formgebung der rückseitigen Stirnseite der Multifunktionshalterung vergrößert sind. Eine Multifunktionshalterung kann zudem eine zusätzliche Ablageposition für einen z.B. teleskopierbaren Querspriegel schaffen. Eine erfindungsgemäße Multifunktionhalterung kann zudem bisherige Aufnahmeelemente, die z. B. für einen Krantransport der Mulde notwendig waren, ersetzen. Es kann darüber hinaus gleichzeitig als Kettenaufnahme oder Kranöse z. B. für einen Krantransport dienen. Auch kann es zur Halterung von Querspriegel dienen, die zum Öffnen und Schließen der Plane dienen. Auch sogenannte Kettenquerspriegel mit oder ohne Rollelement können gegebenenfalls gehaltert werden. Kettenquerspriegel dienen zur Versteifung durch Spannkräfte der Muldenwände sowie zum Öffnen und Schließen der Plane. Wie bereits ausgeführt, kann eine Multifunktionshalterung auch als Aufnahmevorrichtung für Planenhalter und Planenanschläge dienen.

Als Material für eine erfindungsgemäße Multifunktionshalterung kommen je nach Verwendung und Material des Nutzfahrzeugaufbaus und insbesondere einer Mulde eines Fahrzeuganhängers beispielsweise folgende Materialen in Frage.

Bei Verwendung in einer Stahlmulde: S 355 JO, S 355, S 235, QStE 460 TM / S 460 MC, OStE 690 TM / S 700 MC, E 353.

Bei Verwendung in einer Edelstahlmulde: V2A, XSCrNi 19-10, V4A, X5CrNi Mo17-12-2,

Bei Verwendung in einer Aluminiummulde: AlMg Si 0,5, AlMg Si 0,6, AlMg Si 0,7.

Die Seitenwand der Aluminiummulde kann zum Beispiel aus dem Werkstoff AlMg Si 0,5 - 0,7 bestehen.

Bei all diesen Materialkombinationen ist eine gute Verschweißbarkeit der Multifunktionshalterung mit der Mulde oder einer Innenfläche eines Nutzfahrzeugaufbaus gegeben.

### Kurze Beschreibung der Zeichnungen

Im Folgenden werden anhand der nachfolgenden Zeichnungen beispielhafte Ausführungsformen der vorliegenden Erfindungen näher beschrieben und erläutert. Es zeigt:
Fig. 1 eine perspektivische Rückansicht einer beispielhaften Ausführungsform einer erfindungsgemäßen Multifunktionshalterung,
Fig. 2 eine schematische perspektivische Vorderansicht einer erfindungsgemäßen Multifunktionshalterung in montierten Zustand an einer Muldeninnenwandfläche mit eingestecktem Planenanschlag,
Fig. 3 eine perspektivische Vorderansicht einer erfindungsgemäßen Multifunktionshalterung an einer Innenwandfläche einer Mulde mit eingehaktem Kranhaken eines Hebezeugs,
Fig. 4 eine perspektivische Vorderansicht einer erfindungsgemäßen Multifunktionshalterung am oberen Muldenrand einer Mulde mit eingestecktem Planenhalter,
Fig. 5 eine perspektivische Ansicht eines in eine Multifunktionshalterung gemäß der vorliegenden Erfindung einsteckbaren Planenanschlages,
Fig. 6 einen in eine Multifunktionshalterung gemäß der vorliegenden Erfindung einsteckbaren Planenhalter,
Fig. 7 eine perspektivische Ansicht eines einsteckbaren Planenanschlages mit anderer Formgebung als die gemäß der Fig. 5,
Fig. 8 eine perspektivische Ansicht einer erfindungsgemäßen Mulde mit mehreren Multifunktionshalterungen und darin eingesteckten Spriegeln und Planenhaltern sowie Planenanschlägen, und
Fig. 9 eine weitere beispielhafte Ausgestaltung einer erfindungsgemäßen Mulde mit mehreren Multifunktionshalterungen und darin in eine Parkposition eingesteckten Spriegeln und weiteren Zubehörteilen wie Planenhaltern und Planenanschläge.

### Detaillierte Beschreibung

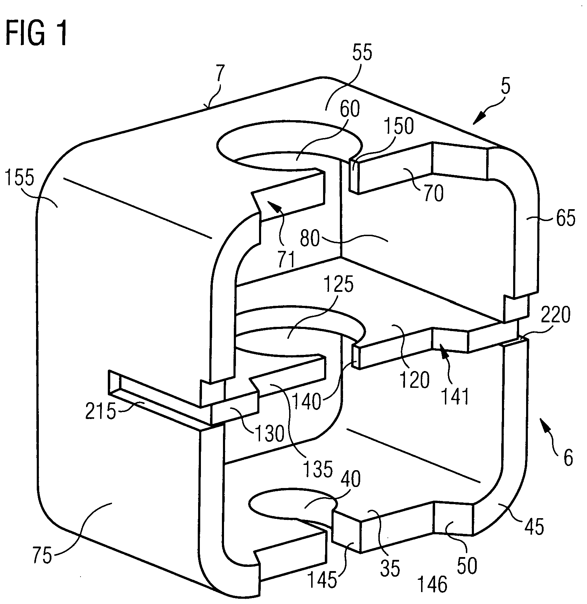

Die Fig. 1 zeigt eine erste beispielhafte Ausführungsform einer erfindungsgemäßen Multifunktionshalterung 5. Bei der hier gezeigten Ansicht ist die Rückseite 6 gezeigt, mit der die Multifunktionshalterung 5 an einer Innenwandfläche 20 einer Mulde 25 fest fixiert wird, beispielsweise durch Schweißen. Die hier gezeigte Multifunktionshalterung 5 weist drei, in Einbaulage übereinander liegende Ebenen auf, die durch ein Bodenelement 35, ein hierzu parallel verlaufendes, in einem Abstand angeordnetes Zwischendeckenelement 120, und ein wiederum parallel verlaufendes und wiederum zum Zwischendeckenelement 120 beabstandetes Deckenelement 55 gebildet sind. Diese drei Elemente 35, 55, 120 bilden zusammen mit rechten und linken Seitenwandelementen 75, 80 die Multifunktionshalterung 5.

Bei einer alternativen Ausgestaltung einer erfindungsgemäßen Multifunktionshalterung 5 kann beispielsweise das Zwischendeckenelement 120 weggelassen sein.

Bei dem hier gezeigten Ausführungsbeispiel ist in dem Bodenelement 35 ein Bodendurchgangsloch 40 vorhanden, das an der rückseitigen Stirnseite 45 eine Bodenausnehmung oder Bodenausklinkung 50 aufweist. Die Bodenausklinkung 50 ist über einen Schlitz 145 mit dem Bodendurchgangsloch 40 verbunden. Die Bodenausklinkung 50 begrenzt in angebrachtem Zustand der Multifunktionshalterung 5 eine Stecköffnung 146.

Das Zwischendeckenelement 120 ist ähnlich wie das Bodenelement 35 ausgebildet. Hier ist ein Zwischendeckenelementdurchgangsloch 125 und an einer rückseitigen Zwischendeckenelementstirnseite 130 eine Zwischendeckenelementausnehmung bzw. Zwischendeckenelementausklinkung 135 vorhanden. Die Zwischendeckenelementausklinkung 135 und das Zwischendeckenelementdurchgangsloch 125 sind wiederum über einen Schlitz 140 verbunden. Auch hier begrenzt die Zwischendeckenelementausklinkung 135 in angebrachtem Zustand der Multifunktionshalterung 5 eine Stecköffnung 141.

Bei dem hier gezeigten Ausführungsbeispiel einer erfindungsgemäßen Multifunktionshalterung 5 ist das Zwischendeckenelement 120 als separates Bauteil ausgebildet, um die Herstellung der Halterung 5 zu vereinfachen. Die Seitenwandelemente 75, 80 weisen hierzu Schlitze 215, 220 auf, in die das randseitig mit entsprechenden Abstufungen versehene Zwischendeckenelement 120 eingeschoben wird. Das eingeschobene Zwischendeckenelement 120 wird dann mit den Seitenwandelementen 75, 80 verschweißt.

Das Deckenelement 55 ist wiederum ähnlich wie das Zwischendeckenelement 120 und das Bodenelement 35 ausgebildet. Wiederum ist ein Deckenelementdurchgangsloch 60 vorhanden, das über einen Schlitz 150 mit einer rückseitigen Deckenelementausnehmung bzw. Deckenelementausklinkung 70 verbunden ist. Die Deckenelementausklinkung 70 befindet sich an der rückseitigen Stirnseite 65 des Deckenelements 55. Auch hier ist wiederum durch die Deckenelementausklinkung 70 eine Stecköffnung 71 in eingebautem Zustand der Muldenfunktionshalterung 5 geschaffen.

Der guten Ordnung halber ist hervorzuheben, dass bei der hier gezeigten Ausführungsform einer erfindungsgemäßen Multifunktionshalterung 5 die Schlitze 140, 145 und 150 herstellungsbedingt vorhanden sein können. Sie sind für die Funktion der Multifunktionshalterung 5 nicht zwingend erforderlich. Es kann aber beispielsweise sein, dass hierdurch auch ein einzusteckendes Teil einbringbar ist, das gleichzeitig das Durchgangsloch und die Ausklinkung ausfüllt.

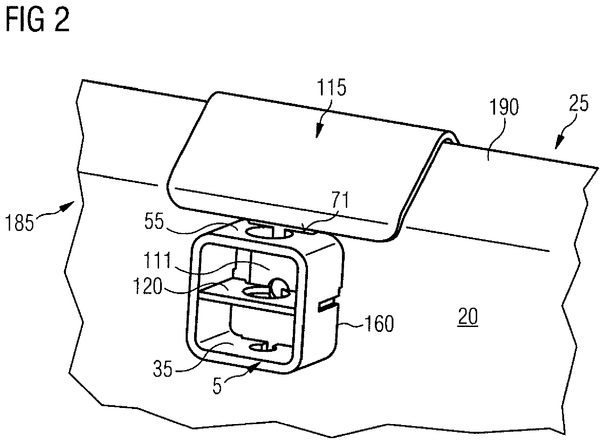

Bei der in der Fig. 2 gezeigten perspektivischen Vorderansicht ist die Multifunktionshalterung 5 gemäß der Fig. 1 an einer Innenwand 20 der Mulde 25 eines Nutzfahrzeugs angeschweißt. Die Schweißnaht 160 ist hier nur angedeutet und verläuft am hinteren Rand bzw. Rückseite der Multifunktionshalterung 5, lässt aber die Ausklinkungen 50, 70 und 135 frei. Die Multifunktionshalterung 5 ist hier im Bereich eines oberen Muldenrandes 190 der Mulde 25 angeschweißt und schafft eine Einsteckmöglichkeit für Zubehörteile, hier beispielsweise ein Planenhalter 110, der eine Stecklasche 111 hat, die in die Stecköffnungen 71, 141 ragt.

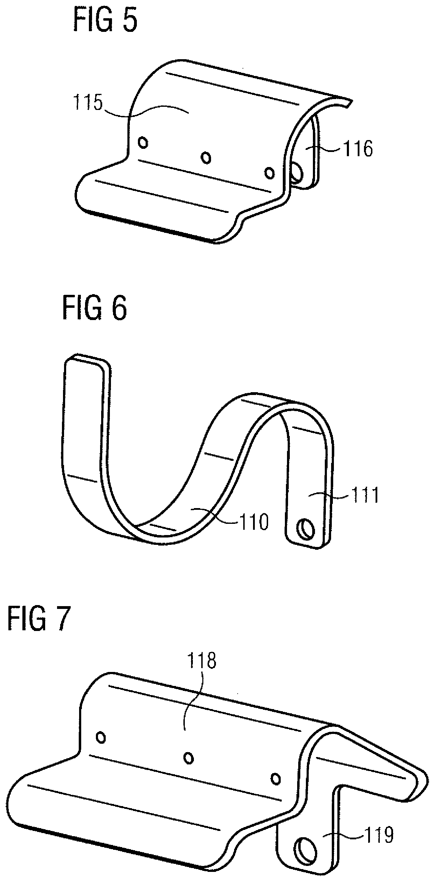

Bei alternativen Ausführungsformen kann die Stecklasche 111 auch kürzer oder länger sein, so dass sie nur in eine oder mehrere der Stecköffnungen 71, 141, 146 reicht. Der Planenhalter 110 und der Planenanschlag 115, 118 an sich sind entsprechend dem oberen Muldenrand 190 der Mulde 25 ausgebildet, und dieser Randform angepasst geformt. Weitere Details hierzu folgen anhand der Fig. 5 bis 7.

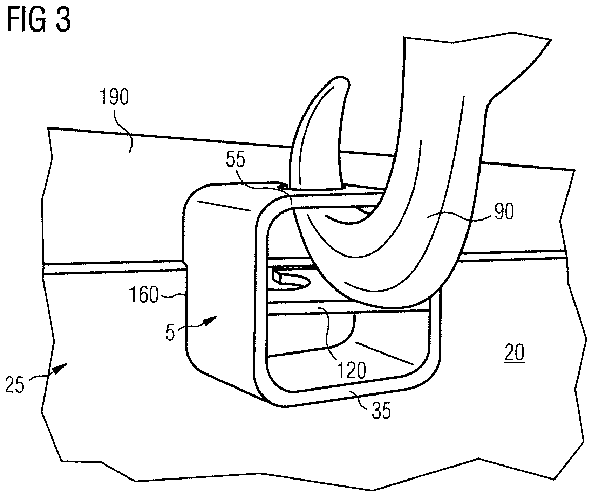

Bei der in der Fig. 3 gezeigten Vorderansicht der erfindungsgemäßen Multifunktionshalterung 5 in angeschweißtem Zustand an der Mulde 25 ist ein Haken 90 in den Zwischenraum zwischen dem Zwischendeckenelement 120 und dem Deckenelement 55 eingeführt, und die Hakenspitze ragt aus dem oberen Deckenelementdurchgangsloch 60 heraus. Damit ist die Mulde 25 mittels des Hakens 90 anhebbar. Es kann aber gleichzeitig ein Planenhalter 110 oder dergleichen eingesteckt sein. Falls notwendig, kann der Haken 90 auch in das untere Bodendurchgangsloch 40 eingeführt sein, alternativ ist aber dieses Bodendurchgangsloch für andere Spann- oder Zurrmittel wie Haken oder Schäkel verwendbar.

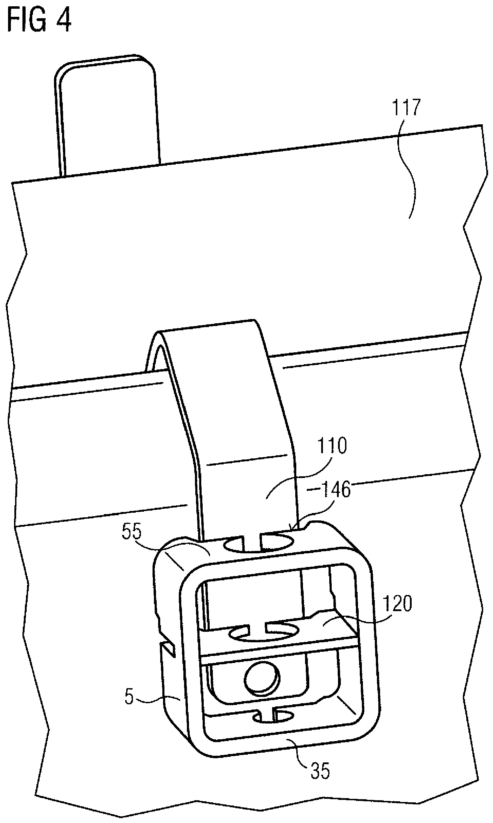

Ein Planenhalter 110 ist in der Fig. 4 gezeigt. Hier ist die aufgerollte Plane 117 auf dem außenseitigen wannenförmigen Streifen des Planenhalters 110 aufliegend gezeigt. Der Planenhalter 110 ist wiederum über eine Stecklasche 111 in die entsprechenden Stecköffnungen 71, 141 in der Multifunktionshalterung 5 eingeführt.

Die Fig. 5 zeigt nochmals eine beispielhafte Ausgestaltung eines Planenanschlages 115, der in eine erfindungsgemäße Multifunktionshalterung 5 einsteckbar ist,

Die Fig. 6 zeigt einen Planenhalter 110, wie er in der Fig. 4 in eingestecktem Zustand gezeigt ist.

Die Fig. 7 zeigt eine perspektivische Ansicht einer alternativen Ausgestaltung eines Planenanschlages 118, der eine etwas andere Form hat als der gemäß der Fig. 5, jedoch von der Funktionsweise wiederum über eine Stecklasche in eine erfindungsgemäße Multifunktionshalterung 5 einsteckbar ist.

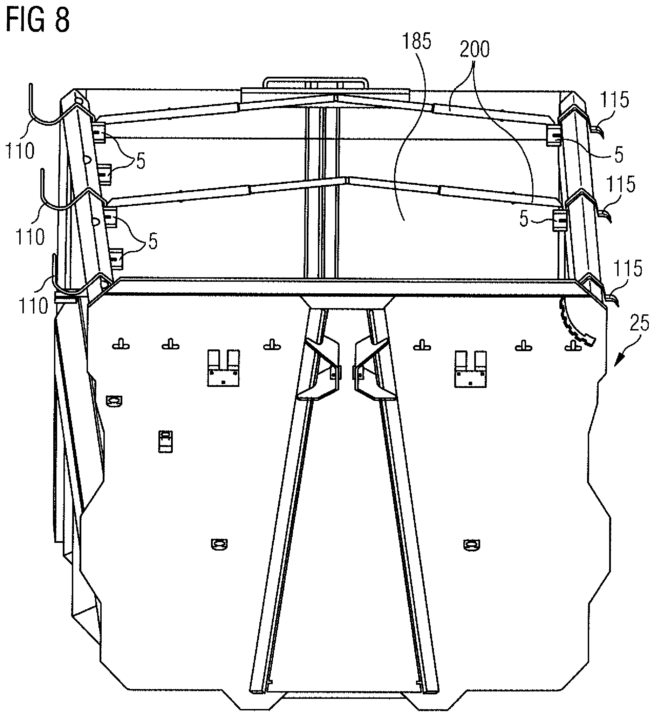

Die Fig. 8 zeigt eine erfindungsgemäße Mulde 25 mit mehreren erfindungsgemäßen Multifunktionshalterungen 5 und darin eingesteckten Planenhaltern 110 sowie Planenanschlägen 115. Ferner sind in mehreren einander gegenüberliegenden Multifunktionshalterungen 5 Spriegel 200 eingesteckt, die als Abstützung für eine über den Laderaum gezogene Plane 117 dienen.

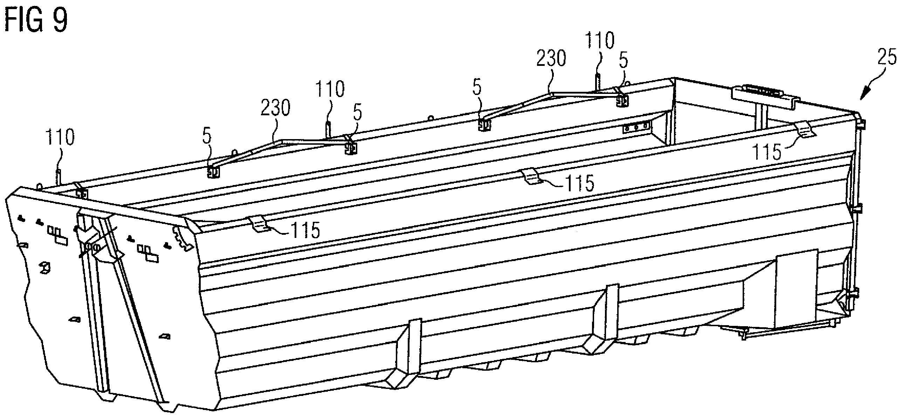

Bei der in der Fig. 9 gezeigten Ausführungsform einer beispielhaften erfindungsgemäßen Mulde 25 sind Spriegel 200 in Längsrichtung der Mulde 25 eingesteckt. Die Spriegel 200 sind allgemein rohrförmig ausgebildet und weisen kurze Rohrendstücke auf, die in das oberste Deckenelementdurchgangsloch 60 und eventuell auch in weitere Durchgangslöcher 125 und 60, 40 ragen können.

Allgemein ist noch anzumerken, dass eine beispielhafte Ausführungsform einer erfindungsgemäßen Multifunktionshalterung 5 Außenabmessungen von ungefähr 100 mm * 100 mm haben kann. Der lichte Abstand zwischen dem Deckenelement 55 und dem Zwischendeckenelement 120 als auch der lichte Abstand zwischen dem Zwischendeckenelement 120 und dem Bodenelement 35 kann beispielsweise ungefähr 40-50 mm betragen. Der Durchmesser der Durchgangslöcher kann beispielsweise zwischen 20 mm und 40 mm betragen. Die Tiefe der Multifunktionshalterung kann 50 mm bis 80 mm oder mehr betragen. Eine Ausnehmung kann eine Stecköffnungsbreite von ungefähr 45 bis 60 mm und eine Stecköffnungstiefe von 5 bis 20 mm definieren. Die Materialstärke bei Stahl beträgt beispielsweise 5- 10 mm, vorzugsweise 8 mm. Bei der Verwendung von Aluminium für die Multifunktionshalterung kann es sein, dass größere Abmessungen notwendig sind, um die für die verschiedenen Funktionen notwendige Steifigkeit und Festigkeit zu erreichen.

## Patentansprüche

1. Multifunktionshalterung (5) zum Anbringen, insbesondere Anschweißen an einen Aufbau oder einer Wand eines Nutzfahrzeugs, insbesondere einer Innenwand (20) einer Mulde (25) eines Sattelaufliegers, umfassend:
- ein Bodenelement (35), das ein Bodendurchgangsloch (40) und an einer rückseitigen Stirnseite (45) eine rückseitige Bodenausnehmung (50) aufweist;
- ein von dem Bodenelement (35) beabstandetes und hierzu im Wesentlichen parallel verlaufendes Deckenelement (55), das ein Deckenelementdurchgangsloch (60) und an einer rückseitigen Stirnseite (65) eine rückseitige Deckenelementausnehmung (70) aufweist;
- ein erstes Seitenwandelement (75);
- ein zweites Seitenwandelement (80), das von dem ersten Seitenwandelement (75) beabstandet angeordnet ist und durch das Bodenelement (35) und das Deckenelement (55) mit dem gegenüberliegenden ersten Seitenwandelement (75) starr verbunden ist;
wobei:
- wenigstens das Deckenelementdurchgangsloch (60) dazu ausgebildet ist, einen Spriegel (200, 230) aufzunehmen, und
- wenigstens eines der Durchgangslöcher (40, 60) dazu ausgebildet ist, das Einhängen eines Eingriffselementes wie ein Haken (90) oder ein Schäkel zu ermöglichen, und
- wenigstens eine der Ausnehmungen (50, 70) dazu ausgebildet ist, eine Stecköffnung (71, 146) für eine Stecklasche (111, 116, 119) eines Planenhalters (110) und/oder eines Planenanschlags (115, 118) zu begrenzen.

2. Multifunktionshalterung nach Anspruch 1, ferner umfassend:
- ein zwischen dem Bodenelement (35) und dem Deckenelement (55) jeweils mit Abstand angeordnetes, im Wesentlichen parallel hierzu verlaufendes Zwischendeckenelement (120), das ein Zwischendeckendurchgangsloch (125) und an einer rückseitigen Zwischendeckenelementstirnseite (130) eine rückseitige Zwischendeckenelementausnehmung (135) aufweist,
wobei
- wenigstens die zwei Durchgangslöcher (60, 125) im Deckenelement (55) und dem Zwischendeckenelement (120) dazu ausgebildet sind, einen Spriegel (200, 230) lösbar zu halten, und
- wenigstens zwei der drei Durchgangslöcher (40, 60, 125) dazu ausgebildet sind, das Einhängen eines Eingriffselementes wie ein Haken (90) oder ein Schäkel zu ermöglichen, und
- wenigstens die Deckenelementausnehmung (70) und die Zwischendeckenelementausnehmung (135) dazu ausgebildet sind, eine Stecköffnung (71, 141) für eine Stecklasche (111) eines Planenhalters (110) und/oder eines Planenanschlages (115, 118) zu begrenzen.

3. Multifunktionshalterung nach Anspruch 1 oder 2, bei der:
- ein Schlitz (150) das Deckendurchgangsloch (60) und die Deckenelementausnehmung (70) miteinander verbindet, und/oder
- ein Schlitz (140) das Zwischendeckenelementdurchgangsloch (125) und die Zwischendeckenelementausnehmung (135) miteinander verbindet, und/oder
- ein Schlitz (145) das Bodendurchgangsloch (40) und die Bodenausnehmung (50) miteinander verbindet.

4. Multifunktionshalterung nach einem der voranstehenden Ansprüche, bei der das Bodenelement (35), das Deckenelement (55), das erste und das zweite Seitenwandelement (75, 80) einteilig aus einem Profilrohr hergestellt sind.

5. Multifunktionshalterung nach einem der Ansprüche 2 und 3 sowie 4 rückbezogen auf einen der Ansprüche 2 und 3, bei der das Zwischendeckenelement (120) an den zwei Seitenwandelementen (75, 80) angeschweißt ist.

6. Multifunktionshalterung nach einem der Ansprüche 2, 3, 5 sowie 4 rückbezogen auf einen der Ansprüche 2 und 3, bei der das Zwischendeckenelement (120) in Schlitze (215) in den Seitenwandelementen (75, 80) eingeschoben und mit den zwei Seitenwandelementen (75, 80) verschweißt ist.

7. Multifunktionshalterung nach einem der Ansprüche 2-6, bei der wenigstens die Durchgangslöcher (60, 40, 125) in dem Deckenelement (55) und dem benachbarten Element (35, 120) sich in Längsachsenrichtung der Multifunktionshalterung (5) zumindest teilweise überdecken.

8. Multifunktionshalterung nach einem der voranstehenden Ansprüche 2-7, bei der wenigstens das Deckenelementdurchgangsloch (60) und das Durchgangsloch (40, 125) im benachbarten Element (35, 120) im Wesentlichen kreisförmig sind.

9. Multifunktionshalterung nach Anspruch 7, bei der das Deckendurchgangsloch (60) und das Durchgangsloch (40, 125) im benachbarten Element (35, 120) einen im Wesentlichen gleichen Durchmesser aufweisen.

10. Mulde (25) zum Befestigen auf einem Nutzfahrzeug wie einen Sattelauflieger, mit:
- einer rechten Muldeninnenwandfläche;
- einer linken Muldeninnenwandfläche,
- einer vorderen Muldenstirnwandinnenfläche, die mit der rechten und linken Muldeninnenwandwand verbunden ist und zusammen mit diesen einen Laderaum (185) begrenzt;
- wenigstens eine Multifunktionshalterung (5) nach einem der voranstehenden Ansprüche, die an einer der Muldeninnenwandflächen oder der Muldenstirnwandinnenfläche angebracht ist, wobei die Ausnehmungen (50, 70, 135) zusammen mit der Innenwandfläche eine Stecköffnung (71, 141, 146,) begrenzen, die derart ausgebildet ist, dass ein entsprechend geformtes Steckelement wie ein Planenhalter (110) oder ein Planenanschlag (115, 118) einsteckbar ist.

11. Mulde nach Anspruch 10, bei dem das Deckenelement (55) sich im Bereich eines oberen Muldenrandes (190) befindet.

12. Mulde nach Anspruch 10 oder 11, die dazu ausgebildet ist, auf einem Nutzfahrzeugfahrgestell wie dem eines Lastkraftwagens oder einem Nutzfahrzeuganhänger befestigt zu werden.

## Claims

1. A multifunction holder (5) for attaching, in particular, welding to a body or a wall of a utility vehicle, in particular, an inner wall (20) of a trough (25) of a semitrailer, including:
- a floor element (35), which comprises a floor through hole (40) and, at a rear-sided face (45), a rear-sided floor recess (50);
- a ceiling element (55) spaced apart from and running essentially parallel to the floor element (35), which comprises a ceiling through hole (60) and, at a rear-sided face (65), a rear-sided ceiling element recess (70);
- a first side wall element (75);
- a second side wall element (80) disposed spaced apart from the first side wall element (75) and rigidly connected to the opposite first side wall element (75) by the floor element (35) and the ceiling element (55);
wherein:
- at least the ceiling element through hole (60) is configured to receive a hoop (200, 230), and
- at least one of the through holes (40, 60) is configured to enable the hooking-in of an engagement element such as a hook (90) or a shackle, and
- at least one of the recesses (50, 70) is configured to delimit an insertion opening (71, 146) for an insertion flap (111, 116, 119) of a tarpaulin holder (110) and/or a tarpaulin stopper (115, 118).

2. The multifunction holder according to claim 1, further including:
- an intermediate ceiling element (120) disposed respectively at a distance between the floor element (35) and the ceiling element (55), running essentially parallel thereto, which comprises an intermediate ceiling through hole (125) and, at a rear-sided intermediate ceiling element face (130), a rear-sided intermediate ceiling element recess (135),
wherein
- at least the two through holes (60; 125) in the ceiling element (55) and the intermediate ceiling element (120) are configured to releasably hold a hoop (200, 230), and
- at least two of the three through holes (40, 60, 125) are configured to enable the hooking-in of an engagement element such as a hook (90) or a shackle, and
- at least the ceiling element recess (70) and the intermediate ceiling element recess (135) are configured to delimit an insertion opening (71, 141) for an insertion flap (111) of a tarpaulin holder (110) and/or a tarpaulin stopper (115, 118).

3. The multifunction holder according to claim 1 or 2, wherein:
- a slot (150) connects the ceiling through hole (60) and the ceiling element recess (70) with each other, and/or
- a slot (140) connects the intermediate ceiling element through hole (125) and the intermediate ceiling element recess (135) with each other, and/or
- a slot (145) connects the floor through hole (40) and the floor recess (50) with each other.

4. The multifunction holder according to any one of the preceding claims, wherein the floor element (35), the ceiling element (55), the first and the second side wall elements (75, 80) are manufactured integrally from a section tube.

5. The multifunction holder according to any one of claims 2 and 3 as well as 4 dependent on any one of claims 2 and 3, wherein the intermediate ceiling element (120) is welded to the two side wall elements (75, 80).

6. The multifunction holder according to any one of claims 2, 3, 5 as well as 4 dependent on any one of claims 2 and 3, wherein the intermediate ceiling element (120) is inserted into slots (215) in the side wall elements (75, 80) and welded to the two side wall elements (75, 80).

7. The multifunction holder according to any one of claims 2-6, wherein at least the through holes (60, 40, 125) in the ceiling element (55) and the neighboring element (35, 120) overlap at least partly in longitudinal direction of the multifunction holder (5).

8. The multifunction holder according to any one of the preceding claims 2-7, wherein at least the ceiling element through hole (60) and the through hole (40, 125) in the neighboring element (35, 120) are essentially circular.

9. The multifunction holder according to claim 7, wherein the ceiling through hole (60) and the through hole (40, 125) in the neighboring element (35, 120) have an essentially equal diameter.

10. A trough (25) for mounting on a utility vehicle such as a semitrailer, with:
- a right trough inner wall face;
- a left trough inner wall face,
- a front trough end wall inner face, which is connected to the right and left trough inner wall faces and delimits a cargo space (185) together with those;
- at least one multifunction holder (5) according to any one of the preceding claims, which is attached to one of the trough inner wall faces or the trough end wall inner face, wherein the recesses (50, 70, 135) together with the inner wall face delimit an insertion opening (71, 141, 146), which is configured such that a correspondingly shaped insertion element such as a tarpaulin holder (110) or a tarpaulin stopper (115, 118) is insertable.

11. The trough according to claim 10, wherein the ceiling element (55) is located in the region of an upper trough rim (190).

12. The trough according to claim 10 or 11, which is configured to be mounted on a utility vehicle chassis such as that of a motor truck or a utility vehicle trailer.

## Revendications

1. Fixation multifonctions (5) à monter, en particulier à souder sur une carrosserie ou une paroi d'un véhicule utilitaire, en particulier d'une paroi intérieure (20) d'une cavité (25) d'une semi-remorque, comprenant :
- un élément de fond (35), qui présente un trou traversant le fond (40) et un évidement de fond arrière (50) au niveau d'une face frontale arrière (45) ;
- un élément de plafond (55) espacé de l'élément de fond (35) et sensiblement parallèle à celui-ci, qui présente un trou traversant d'élément de plafond (60) et un évidement d'élément de plafond arrière (70) au niveau d'une face frontale arrière (65) ;
- un premier élément de paroi latérale (75) ;
- un deuxième élément de paroi latérale (80), qui est agencé à distance du premier élément de paroi latérale (75) et est relié de manière rigide au premier élément de paroi latérale (75) opposé par l'élément de fond (35) et l'élément de plafond (55) ;
dans laquelle :
- au moins le trou traversant d'élément de plafond (60) est réalisé pour recevoir un arceau (200, 230), et
- au moins un des trous traversants (40, 60) est réalisé pour permettre l'accrochage d'un élément de prise comme un crochet (90) ou une manille, et
- au moins un des évidements (50, 70) est réalisé pour délimiter une ouverture d'enfichage (71, 146) pour une patte d'enfichage (111, 116, 119) d'un porte-bâche (110) et/ou d'une butée de bâche (115, 118).

2. Fixation multifonctions selon la revendication 1, comprenant en outre :
- un élément de plafond intermédiaire (120) agencé respectivement à distance entre l'élément de fond (35) et l'élément de plafond (55), s'étendant de manière sensiblement parallèle à ceux-ci, qui présente un trou traversant de plafond intermédiaire (125) et un évidement d'élément de plafond intermédiaire arrière (135) au niveau d'une face frontale d'élément de plafond intermédiaire arrière (130),
dans laquelle
- au moins les deux trous traversants (60, 125) dans l'élément de plafond (55) et l'élément de plafond intermédiaire (120) sont réalisés pour maintenir un arceau (200, 230) de manière amovible, et
- au moins deux des trois trous traversants (40, 60, 125) sont réalisés pour permettre l'accrochage d'un élément de prise comme un crochet (90) ou une manille, et
- au moins l'évidement d'élément de plafond (70) et l'évidement d'élément de plafond intermédiaire (135) sont réalisés pour délimiter une ouverture d'enfichage (71, 141) pour une patte d'enfichage (111) d'un porte-bâche (110) et/ou d'une butée de bâche (115, 118).

3. Fixation multifonctions selon la revendication 1 ou 2, dans laquelle :
- une fente (150) relie l'un à l'autre le trou traversant de plafond (60) et l'évidement d'élément de plafond (70), et/ou
- une fente (140) relie l'un à l'autre le trou traversant d'élément de plafond intermédiaire (125) et l'évidement d'élément de plafond intermédiaire (135), et/ou
- une fente (145) relie l'un à l'autre le trou traversant de fond (40) et l'évidement de fond (50).

4. Fixation multifonctions selon l'une quelconque des revendications précédentes, dans laquelle l'élément de fond (35), l'élément de plafond (55), le premier et le deuxième élément de paroi latérale (75, 80) sont fabriqués d'un seul tenant à partir d'un tube profilé.

5. Fixation multifonctions selon l'une quelconque des revendications 2 et 3 ainsi que 4 en référence à l'une des revendications 2 et 3, dans laquelle l'élément de plafond intermédiaire (120) est soudé aux deux éléments de paroi latérale (75, 80).

6. Fixation multifonctions selon l'une quelconque des revendications 2, 3, 5 ainsi que 4 en référence à l'une des revendications 2 et 3, dans laquelle l'élément de plafond intermédiaire (120) est inséré dans des fentes (215) dans les éléments de paroi latérale (75, 80) et est soudé aux deux éléments de paroi latérale (75, 80).

7. Fixation multifonctions selon l'une quelconque des revendications 2-6, dans laquelle au moins les trous traversants (60, 40, 125) dans l'élément de plafond (55) et l'élément adjacent (35, 120) se couvrent au moins en partie dans la direction de l'axe longitudinal de la fixation multifonctions (5).

8. Fixation multifonctions selon l'une quelconque des revendications précédentes 2-7, dans laquelle au moins le trou traversant d'élément de plafond (60) et le trou traversant (40, 125) dans l'élément adjacent (35, 120) sont sensiblement circulaires.

9. Fixation multifonctions selon la revendication 7, dans laquelle le trou traversant de plafond (60) et le trou traversant (40, 125) dans l'élément adjacent (35, 120) ont sensiblement le même diamètre.

10. Cavité (25) à fixer sur un véhicule utilitaire comme une semi-remorque, avec :
- une surface de paroi intérieure de cavité droite ;
- une surface de paroi intérieure de cavité gauche ;
- une surface intérieure de paroi frontale de cavité avant, qui est reliée à la paroi paroi intérieure de cavité droite et gauche et délimite avec celles-ci un espace de chargement (185) ;
- au moins une fixation multifonctions (5) selon l'une quelconque des revendications précédentes, qui est montée sur une des surfaces de paroi intérieure de cavité ou la surface intérieure de paroi frontale de cavité, dans laquelle les évidements (50, 70, 135) délimitent conjointement avec la surface de paroi intérieure une ouverture d'enfichage (71, 141, 146), qui est réalisée de telle manière qu'un élément d'enfichage de forme correspondante peut être enfiché comme un porte-bâche (110) et/ou une butée de bâche (115, 118).

11. Cavité selon la revendication 10, dans laquelle l'élément de plafond (55) se trouve dans la zone d'un bord de cavité supérieur (190).

12. Cavité selon la revendication 10 ou 11, qui est réalisée pour être fixée sur un châssis de véhicule utilitaire comme celui d'un camion ou d'une remorque de véhicule utilitaire.
